# EUROPÄISCHE PATENTSCHRIFT

(11) **EP 2 928 611 B1**
(45) Veröffentlichungstag und Bekanntmachung des Hinweises auf die Patenterteilung: **08.03.2017**
(21) Anmeldenummer: 14700990.6
(22) Anmeldetag: 15.01.2014
(51) Int. Cl.: B02C 15/00, B02C 25/00

(54) **VERFAHREN ZUR ANTRIEBSREGELUNG SOWIE NACH DEM VERFAHREN ARBEITENDES ANTRIEBSSYSTEM**
DRIVE CONTROL METHOD AND DRIVE SYSTEM OPERATING ACCORDING TO SAID METHOD
PROCÉDÉ DE RÉGLAGE D'ENTRAÎNEMENT ET SYSTÈME D'ENTRAÎNEMENT FONCTIONNANT SELON CE PROCÉDÉ

(30) Priorität: 16.01.2013 DE 102013200578
(43) Veröffentlichungstag der Anmeldung: 14.10.2015
(73) Patentinhaber: Siemens Aktiengesellschaft, 80333 München (DE)
(72) Erfinder: KUBE, Andreas, 52078 Aachen (DE)
(86) Internationale Anmeldenummer: PCT/EP2014/050676
(87) Internationale Veröffentlichungsnummer: WO 2014/111410

(56) Entgegenhaltungen:
- EP-A1- 2 492 016
- WO-A1-2008/049545
- DE-A1-102007 006 092
- DE-A1-102007 033 256
- JP-A- H09 141 116

## Beschreibung

Die vorliegende Erfindung betrifft ein Verfahren zur Antriebsregelung, nämlich ein Verfahren zur Antriebsregelung eines Schwerlastantriebs, insbesondere eines Schwerlastantriebs einer zum Zerkleinern spröder Materialien, zum Beispiel Zementrohmaterial, bestimmten Vertikalmühle sowie ein korrespondierendes, nach dem Verfahren arbeitendes Antriebssystem.

Vertikalmühlen der oben genannten Art mit einem um die Vertikale rotierenden Mahlteller sowie Mahlwalzen oberhalb des Mahltellers neigen zu starken mechanischen Schwingungen, denn vereinfacht ausgedrückt handelt es sich bei dem Antriebsstrang einer Vertikalmühle um ein schwingfähiges System in Form eines Zweimassenschwingers. Zu der ersten Masse gehören der Mahlteller sowie alle mit dem Mahlteller bewegten Einheiten und die zweite Masse ist der Rotor des antreibenden Motors. Die Verbindung zwischen diesen beiden Massen besteht in Form eines Getriebes, das in dem schwingfähigen System wie eine Torsionsfeder fungiert. Das System wird durch kontinuierliche niederfrequente Lastwechsel aus dem Mahlprozess sowie zufällige Wechselbelastungen aus dem Mahlprozess zu kurzzeitigen oder auch länger andauernden Schwingungen angeregt. Die dabei entstehenden Kräfte und Momente können so stark werden, dass der Mahlprozess gestoppt werden muss, um Schäden am Antriebsstrang, nämlich insbesondere am Elektromotor und/oder am Getriebe, oder der Anlage insgesamt zu vermeiden. Der Grund für das Aufklingen von Schwingungen im Antriebsstrang (Triebstrangschwingungen) ist, dass die Dämpfung im Antriebsstrang (Triebstrangdämpfung) nicht ausreicht, um aus der Arbeitsmaschine (Mahlwerk) eingebrachte Schwingungsenergie zu kompensieren.

Um solche Schwingungen gering zu halten, muss der Betreiber der Mühle bisher die Prozessparameter, also insbesondere einen Anpressdruck der Mahlwalzen, eine Rezeptur des Mahlguts sowie Zugabemengen von Mahlhilfen, so gestalten, dass die Schwingungsanregung unter einem kritischen Niveau bleibt. Dies führt jedoch zu unerwünschten Einschränkungen in der Prozessgestaltung, die sich negativ auf viele Bereiche auswirken. Betroffen sind zum Beispiel das Spektrum von mit dem jeweils erhaltenen Mahlgut herstellbaren Produkten, die Effektivität der Mühle, der erforderliche Energieeinsatz und die Kosteneffizienz. Außerdem ist ein solcher Weg sehr unzuverlässig, da für die richtige Prozessführung viel Erfahrung erforderlich ist und die Eigenschaften der vermahlenen Naturmaterialien immer unterschiedlich sind. So kommt es immer wieder zu erhöhten Torsionsschwingungen.

Vor diesem Hintergrund und aufgrund der wachsenden Anforderungen hinsichtlich Verfügbarkeit, Effizienz sowie der Lebensdauerkosten (TCO = Total Cost of Ownership) gewinnt die Auslegung und die Anordnung der elektrischen und mechanischen Komponenten eines Antriebssystems und des jeweiligen Antriebsstrangs eines Schwerlastantriebs, insbesondere einer Vertikalmühle, zunehmend an Bedeutung.

Für Vertikalmühlen stellen derzeit Antriebssysteme mit einem Getriebe und zumindest einem Elektromotor in Form eines Asynchronmotors, vorzugsweise einem Schleifringläufer, sowie einem den mindestens einen Elektromotor speisenden Frequenzumrichter eine bevorzugte Lösung dar. Hierbei sind die Mühlengetriebe in der Praxis häufig als Varianten von Kegel- oder Stirnrad-Planetengetrieben ausgeführt. Die Aufgabe des Getriebes ist neben der Drehzahl- und Drehmomentwandlung die Aufnahme der axialen Mahlkräfte und deren Weiterleitung in das Fundament.

Bisher ist versucht worden, das oben skizzierte Problem durch eine Integration eines mechanischen Elements in den Antriebsstrang zu lösen, wobei das jeweilige mechanische Element oder gegebenenfalls auch eine Mehrzahl mechanischer Elemente sich durch eine entsprechend starke Dämpfungswirkung auszeichnet bzw. auszeichnen. Derzeit kommen als derartige Elemente mit einer ausreichend starken Dämpfungswirkung Kupplungen, insbesondere hochelastische Elastomerkupplungen, zum Einsatz.

Nachteilig an dieser Lösung ist zum einen, dass es sich bei einer solchen Kupplung um ein teures Verschleißteil handelt. Zum anderen liegt die Wirkungsweise einer mit einer Kupplung erreichten Triebstrangdämpfung in der Umwandlung von Schwingungsenergie in Wärmeenergie, was sich negativ auf die Energiebilanz auswirkt. Schließlich ist auch der mit einer solchen Kupplung erreichbare Grad der Triebstrangdämpfung immer noch recht gering und hat sich in Einzelfällen als nicht ausreichend herausgestellt.

Aus der DE 10 2007 033 256 A1 ist ein Mühlenantrieb mit einem Hauptantrieb, einem Überlagerungsgetriebe und einem geregelten Zusatzantrieb bekannt. Der Zusatzantrieb und dessen Regelung sollen auf Basis eines aktuellen Drehmoments und eines gemittelten Drehmoments als Eingangsgröße je nach Gewichtung entsprechender Regelkreise Drehmomentschwankungen des Hauptantriebs und Drehzahlschwankungen des Mahltellers reduzieren.

Eine Aufgabe der vorliegenden Erfindung besteht darin, ein Verfahren zur Antriebsregelung einer Vertikalmühle und ein nach dem Verfahren arbeitendes Antriebssystem anzugeben, das Triebstrangschwingungen reduziert, insbesondere ein Verfahren und eine korrespondierende Vorrichtung, das bzw. die Triebstrangschwingungen ohne Verwendung einer Kupplung oder eines sonstigen mechanischen Dämpfers im Antriebsstrang sowie ohne Verwendung eines Zusatzantriebs reduziert.

Die oben genannte Aufgabe wird durch ein Verfahren zur Antriebsregelung einer Vertikalmühle mit den Merkmalen des Anspruchs 1 gelöst. Die Aufgabe wird außerdem durch ein Antriebssystem sowie eine von dem Antriebssystem umfasste Regelungseinrichtung mit den Merkmalen des parallelen Vorrichtungsanspruchs sowie durch eine Vertikalmühle oder ein Antriebssystem einer Vertikalmühle mit einer solchen Regelungseinrichtung gelöst.

Die hier und im Folgenden mitunter auch nur kurz als Mühle bezeichnete Vertikalmühle umfasst einen um die Vertikale drehbaren Mahlteller, der durch mindestens einen Elektromotor und einen zumindest ein Getriebe umfassenden Antriebsstrang antreibbar ist und im Betrieb der Mühle angetrieben wird. Insoweit ergibt sich die eingangs bereits genannte Konfiguration des Zweimassenschwingers mit zumindest dem Mahlteller als erster Masse oder erstem Massenträgheitselement und zumindest dem Rotor des Elektromotors als zweiter Masse oder zweitem Massenträgheitselement, wobei die beiden schwingfähigen Massen durch das dann wie eine Torsionsfeder fungierende Getriebe gekoppelt sind.

Bei dem hier vorgeschlagenen Verfahren zur Antriebsregelung einer Vertikalmühle mit einem um die Vertikale rotierbaren Mahlteller, wobei der Mahlteller durch zumindest einen Elektromotor und einen zumindest ein Getriebe umfassenden Antriebsstrang antreibbar ist und wobei zumindest der Elektromotor und der Mahlteller Massenträgheitselemente in einem schwingfähigen System darstellen, die durch das als Torsionsfederelement wirkende Getriebe verbunden sind, wird eine Drehzahlschwankung zumindest eines der Massenträgheitselemente erfasst und der Elektromotor mittels eines die erfasste Drehzahlschwankung minimierenden Reglers geführt, wobei der Regler zur Führung des Elektromotors derart parametriert wird, dass bei einer sinusförmigen Anregung resultierende, maximale Reaktionsmomente im Getriebe minimal sind, insbesondere bei jeder technisch relevanten Frequenz oder den im Betrieb überwiegend auftretenden Anregungsfrequenzen minimal sind. Die damit erreichte Führung des Elektromotors wird im Folgenden als dämpfungsoptimale Führung bezeichnet.

Bei einer zur Ausführung eines solchen Verfahrens und eventuell einzelner oder mehrerer Ausführungsformen bestimmten Regelungseinrichtung, nämlich einer Regelungseinrichtung zur Antriebsregelung einer Vertikalmühle, ist der Regelungseinrichtung als Eingangsgröße zumindest ein schwingungsrelevanter Messwert, zum Beispiel ein als Maß für die oben erwähnte Drehzahlschwankung geeigneter Messwert, zuführbar. Als schwingungsrelevanter Messwert kommt ein am Elektromotor oder an der Motorwelle oder an einem sonstigen Ort im Antriebsstrang erfasster Drehzahlmesswert in Betracht.

Kurz gefasst ist die Erfindung also ein Verfahren sowie eine Vorrichtung zur Antriebsregelung einer Schwerlastanordnung in Form eines Antriebssystems, bei dem mittels der Regelungseinrichtung eine Führung der Drehzahl des Elektromotors erreicht wird, wobei sich die Führung der Drehzahl dadurch auszeichnet, dass - ohne Verwendung einer mechanischen Dämpfung, wie zum Beispiel einer als Schwingungsdämpfer fungierenden Kupplung oder sonstiger mechanischer Dämpfer - eine Bedämpfung der Drehzahl des Elektromotors eine Bedämpfung von Torsionsschwingungen im Antriebsstrang zur Folge hat.

Als Dämpfung wird dabei eine zeitliche Veränderung der Amplitude der Torsionsschwingungen im Antriebsstrang verstanden. Nimmt die Amplitude ab, ist die Dämpfung positiv. Nimmt die Amplitude zu, ist die Dämpfung negativ. Bleibt die Amplitude konstant, ist die Dämpfung Null. Dämpfung kann verschiedene Ursachen haben. Eine mögliche Ursache für eine positive Dämpfung ist die Umwandlung von Schwingungsenergie in Wärmeenergie, zum Beispiel durch innere oder äußere Reibungsvorgänge bewegter Teile eines Schwingungssystems. Der hier vorgestellte Ansatz nutzt eine andere Möglichkeit zur Erzeugung einer positiven Dämpfung.

Wenn die Vertikalmühle nach einer zeitlich begrenzten Anregung wieder sich selbst überlassen wird, schwingt sie in einer idealisierten Betrachtung als Zweimassenschwinger mit ihrer Eigenfrequenz und einer konstanten Schwingungsamplitude. Bei andauernder Anregung mit der Eigenfrequenz steigt die Schwingungsamplitude theoretisch unendlich an. Es findet keine Dämpfung statt und in der Realität kommt es in diesem Fall zur Beschädigung des Getriebes.

Der bisher verfolgte, herkömmliche Lösungsansatz besteht darin, die Torsionsfeder - also das Getriebe - um ein Dämpfungselement zu ergänzen (zum Beispiel in Form eines mechanischen Dämpfers mit Öl-Verdrängung oder einer hochelastischen Elastomerkupplung). Im Schwingungsmodell tritt also eine Feder-Dämpfer-Kombination an die Stelle des reinen Torsionsfederelements. Das Dämpfungselement wirkt einer Relativbewegung der Massenträgheitselemente, nämlich zumindest des Mahltellers und des Rotors des Elektromotors, entgegen. Ein Teil der Energie der Schwingung wird dabei im Dämpfungselement in Wärme umgewandelt.

Der hier vorgeschlagene Ansatz geht von der Erkenntnis aus, dass eine Schwingung im Antriebsstrang der Vertikalmühle nicht nur mit einer Relativbewegung zwischen den beiden Massenträgheitselementen verbunden ist. Ebenso ergibt sich auch eine schwankende (schwingende) Drehzahl eines jeden Massenträgheitselements bezogen auf dessen zeitlich mittlere Drehzahl. Es findet also eine Drehzahlschwingung um die mittlere Drehzahl statt. Bei der im Folgenden mitunter auch als Motor-Masse bezeichneten Masse des Rotors des Elektromotors entspricht die zeitlich mittlere Drehzahl der im Betrieb jeweils angestrebten Drehzahl, die im Folgenden sowohl für den Fall drehzahlgeregelter wie auch für den Fall sogenannter drehzahlfester Antriebslösungen als Solldrehzahl bezeichnet wird.

Der erfindungsgemäße Ansatz beruht auf der Bedämpfung der hier beschriebenen Drehzahlschwingung an der Motor-Masse. Dabei wird ausgenutzt, dass das Beruhigen von nur einer Schwungmasse des Schwingungssystems bereits ausreicht, um eine beruhigende Wirkung auf das Gesamtsystem zu erreichen. Es ist nicht zwingend erforderlich, auf alle Massenträgheitselemente gleichzeitig einzuwirken, wie dies im herkömmlichen Ansatz bei einem mechanischen Dämpfer der Fall ist.

Um die Drehzahlschwingung der Motor-Masse zu bedämpfen, wird einer Abweichung der Istdrehzahl der Motor-Masse von der jeweiligen mittleren Drehzahl (Solldrehzahl) entgegengewirkt. Dies erfolgt, indem das auf den Rotor wirkende Luftspaltmoment mit einem Zusatzmoment überlagert wird. So wird über das mittlere Luftspaltmoment nach wie vor die Arbeitsleistung der Mühle eingebracht, und über das überlagerte Zusatzmoment die Bedämpfung der Drehzahlschwingung erreicht.

Der Vorteil der Erfindung besteht damit vor allem darin, dass die Bedämpfung des Antriebsstrangs ohne einen mechanischen Schwingungsdämpfer möglich ist.

Dies erfolgt, indem das im Luftspalt des Elektromotors wirkende Moment (Luftspaltmoment) in seinem zeitlichen Verlauf in geeigneter Weise geführt wird. Dies wird mittels eines dämpfungsoptimal parametrierten und als Drehzahlregler fungierenden Reglers, insbesondere eines Reglers in Form eines PI-Reglers, erreicht. Ein dämpfungsoptimaler Reglerparameter oder dämpfungsoptimale Reglerparameter ist bzw. sind dadurch definiert, dass die maximalen Reaktionsmomente im Getriebe auf eine periodische Sinus-Anregung minimal sind, insbesondere eine periodische Sinus-Anregung jeder beim Betrieb der Vertikalmühle technisch relevanten Frequenz oder den im Betrieb überwiegend auftretenden Anregungsfrequenzen minimal sind.

Der auf diese Weise erzielbare Dämpfungsgrad hängt von der Genauigkeit des Drehzahlsensors und von der Verarbeitungsgeschwindigkeit des Drehzahlreglers ab, der als Bestandteil eines Frequenzumrichters ausgeführt sein kann, so dass auch die Verarbeitungsgeschwindigkeit des Frequenzumrichters und eines nachfolgenden Leistungsteils zur Ansteuerung des Elektromotors in Betracht zu ziehen sind. Die verwendeten Komponenten müssen daher hohen Ansprüchen genügen, die im Bereich von Vertikalmühlen bislang nicht gefordert wurden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Wenn der oder jeder Elektromotor von einem Frequenzumrichter gespeist wird, kann das resultierende Sollmoment, also die Überlagerung eines auf der Solldrehzahl basierenden Arbeitsmoments mit einem zur Bedämpfung der Drehzahlschwingung bestimmten Zusatzmoment, dem Frequenzumrichter zugeführt werden, der daraufhin in grundsätzlich an sich bekannter Art und Weise für eine Ansteuerung des oder jedes Elektromotors sorgt, so dass sich das Sollmoment im Antriebsstrang ergibt.

Das Verfahren und die nach dem Verfahren arbeitende Regelungseinrichtung basieren auf automatisch ermittelten Reglerparametern, welche die dämpfungsoptimale Ansteuerung des Elektromotors gewährleisten, also eine Ansteuerung, bei der bei einer sinusförmigen Anregung aus dem Mahlprozess die resultierenden maximalen Reaktionsmomente im Getriebe bei jeder technisch relevanten Frequenz oder im Betrieb überwiegend auftretenden Anregungsfrequenz minimal sind. Die Ermittlung der Reglerparameter erfolgt auf Basis einer Extremwertsuche in einer Mehrzahl von bekannten, mit bestimmten Reglerparametern erreichbaren Dämpfungsgraden. Die bekannten Dämpfungsgrade sind für verschiedenste Reglerparameter entweder vorab experimentell an der jeweiligen Vertikalmühle aufgenommen worden oder das Ergebnis einer Simulation der Vertikalmühle. Innerhalb der Mehrzahl der Dämpfungsgrade wird der größte Dämpfungsgrad gesucht. Dies geschieht mit der Extremwertsuche, die zumindest lokale Extremwerte oder einen absoluten Extremwert findet. Zur Extremwertsuche können an sich bekannte Verfahren, zum Beispiel ein Gradientenverfahren, verwendet werden. Die Extremwertsuche ist in Software implementiert und insoweit ist die Erfindung auch ein Computerprogramm mit Programmcodemitteln, um alle Schritte des hier und im Folgenden beschriebenen Verfahrens durchzuführen, wenn das Computerprogramm auf einer Regelungseinrichtung zur Antriebsregelung einer Vertikalmühle ausgeführt wird. Im Weiteren ist die Erfindung damit auch ein digitales Speichermedium mit elektronisch auslesbaren Steuersignalen, die so mit einer Regelungseinrichtung zur Antriebsregelung einer Vertikalmühle zusammenwirken können, dass ein solches Verfahren ausgeführt wird. Schließlich ist die Erfindung auch eine Regelungseinrichtung zur Antriebsregelung einer Vertikalmühle, die eine Verarbeitungseinheit und einen Speicher umfasst, wobei in den Speicher ein solches Computerprogramm geladen ist und im Betrieb der Regelungseinrichtung durch dessen Verarbeitungseinheit ausgeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung auch Änderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch stark vereinfachte Darstellung einer Vertikalmühle mit einem mittels eines Schwerlastantriebs angetriebenen Mahlteller,
- FIG 2: eine graphische Darstellung experimentell oder im Rahmen einer Simulation aufgenommener Dämpfungsgrade in Abhängigkeit von zwei Reglerparametern und
- FIG 3: ein Diagramm mit einer Echtzeitanalyse einer Triebstrangdynamik der Vertikalmühle in Form des Drehmoments der Motorwelle (Getriebeeingangswelle).

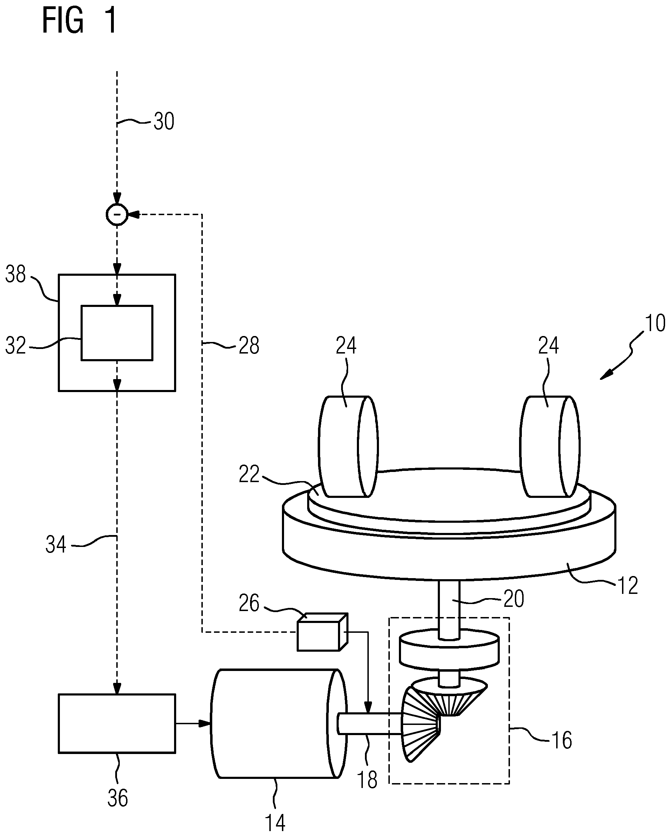

Die Darstellung in FIG 1 zeigt schematisch stark vereinfacht eine Vertikalmühle 10 zum Zerkleinern spröder Materialien, zum Beispiel Zementrohmaterial. Die Vertikalmühle 10 umfasst einen um die Vertikale drehbaren Mahlteller 12. Der Antrieb des Mahltellers 12 erfolgt mittels eines Schwerlastantriebs in Form von zumindest einem Motor, insbesondere zumindest einem Elektromotor 14, und im hier gezeigten Beispiel mittels eines zwischen dem oder jedem Elektromotor 14 und dem Mahlteller 12 befindlichen Getriebes 16. Das Getriebe 16 ist hier ohne Verzicht auf eine weitergehende Allgemeingültigkeit als Kegelradverzahnung mit einem anschließenden, ohne nähere Details dargestellten Planetengetriebe gezeigt. Das Getriebe 16 kann zum Beispiel auch eine Stirnradverzahnung oder dergleichen und/oder ein vorgeschaltetes oder anschließendes Planetengetriebe oder dergleichen umfassen.

Die Vertikalmühle 10 umfasst zumindest eine angetriebene Welle. In der Darstellung in FIG 1 umfasst die Vertikalmühle 10 als antriebsseitige Welle eine Motorwelle 18 und als abtriebsseitige Welle eine Mahltellerwelle 20. Der Elektromotor 14 sowie sämtliche Mittel zur Übertragung der Antriebskraft des Elektromotors 14 auf den Mahlteller 12 werden als Antriebsstrang bezeichnet.

Im Betrieb der Vertikalmühle 10 versetzt der oder jeder Elektromotor 14 den Mahlteller 12 in Rotation. Auf dem Mahlteller 12 befindet sich als Resultat des Mahlvorgangs sowie als Resultat von zugeführten, zu mahlenden und vermahlenen Stoffen ein Mahlbett 22, also eine Mischung von gemahlenem und zu mahlendem Gut. Der Mahleffekt wird erreicht, indem eine Mahlwalze 24 oder mehrere Mahlwalzen 24 einerseits aufgrund ihres Gewichts, aber andererseits gegebenenfalls auch aufgrund zusätzlich aufgebrachter Kräfte, die zum Beispiel mittels eines an einer schwenkbeweglich gelagerten Mahlwalze 24 angreifenden Hydraulikzylinders oder dergleichen aufgebracht werden, auf das Mahlbett 22 und den rotierenden Mahlteller 12 gepresst werden.

Die Vertikalmühle 10 ist insgesamt ein schwingfähiges System und speziell neigt die Vertikalmühle 10 zu starken mechanischen Torsionsschwingungen im Antriebsstrang. Die dabei entstehenden Kräfte und Momente können so stark werden, dass die mechanischen Bauteile des Antriebsstrangs, also zum Beispiel das Getriebe 16, extrem beansprucht oder überbeansprucht werden.

Solchen Torsionsschwingungen hat man bisher mittels einer Kupplung oder dergleichen, zum Beispiel einer hochelastischen Elastomerkupplung, zu begegnen versucht. Eine derartige Kupplung ist zum Beispiel zwischen dem Elektromotor 14 und dem Getriebe 16 angeordnet (nicht gezeigt). Eine solche Kupplung kann Schwingungen in der Drehgeschwindigkeit des Mahltellers 12 zwar nicht ausgleichen, reduziert aber eine Übertragung solcher Schwingungen aus dem Mahlprozess in den Triebstrang.

Hier wird zur Vermeidung solcher Kupplungen und dergleichen vorgeschlagen, dass mittels einer dem Antriebsstrang mittelbar oder unmittelbar zugeordneten Sensorik 26 zumindest ein schwingungsrelevanter Messwert erfasst wird. Als schwingungsrelevanter Messwert wird zum Beispiel eine momentane Drehzahl des Elektromotors 14 (Istdrehzahl 28 des Elektromotors 14) durch Erfassung einer Drehzahl der Motorwelle 18 oder ein Maß für die Drehzahl der Motorwelle 18, zum Beispiel eine zeitliche Ableitung der Drehzahl, erfasst. Eine Differenz aus der Istdrehzahl 28 und einer vorgegebenen oder vorgebbaren Solldrehzahl 30 des Elektromotors 14 wird als Regelabweichung einem als Drehzahlregler fungierenden Regler 32, insbesondere einem Regler 32 in Form eines PI-Reglers 32, zugeführt. Der Regler 32 erzeugt an seinem Ausgang eine Stellgröße 34. Diese wird dem Elektromotor 14 oder einem dem Elektromotor 14 vorgeschalteten Frequenzumrichter 36 zugeführt und stellt eine Überlagerung eines auf der Solldrehzahl 30 basierenden Arbeitsmoments und eines auf der Regelung basierenden Zusatzmoments dar. Der Regler 32 ist eine Funktionseinheit einer Regelungseinrichtung 38, nämlich einer Regelungseinrichtung 38 zur dämpfungsoptimalen Ansteuerung des Elektromotors 14 oder zur mittelbaren dämpfungsoptimalen Ansteuerung des Elektromotors 14 in Form einer Ansteuerung des dem Elektromotor 14 vorgeschalteten Frequenzumrichters 36.

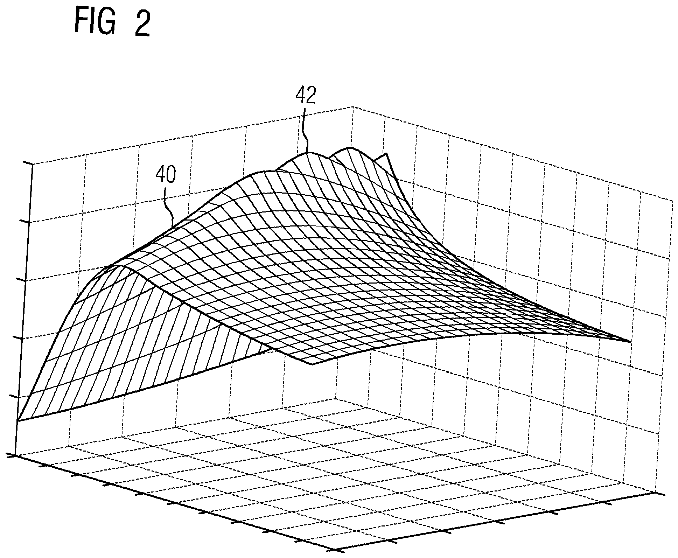

Die Darstellung in FIG 2 zeigt den Dämpfungsgrad in Abhängigkeit von zwei Reglerparametern des Reglers 32, nämlich in Abhängigkeit von einem den Proportionalteil des Reglers 32 bestimmenden Verstärkungsfaktor Kp und einer den Integralteil des Reglers 32 bestimmenden Nachstellzeit Tn des dann als PI-Regler ausgeführten Reglers 32. Der für einzelne Reglerparameter resultierende Dämpfungsgrad ist auf der in der Darstellung nach oben weisenden z-Achse abgetragen und mit unterschiedlichen Reglerparametern, die auf den beiden Achsen in der horizontalen Ebene abgetragen sind, resultiert eine dreidimensionale Fläche 40 mit zumindest einem Extremwert 42. Die zu dem Extremwert 42 gehörigen Reglerparameter, also der zu dem Extremwert 42 gehörige Verstärkungsfaktor Kp und die zu dem Extremwert 42 gehörige Nachstellzeit Tn, stellen die optimalen Parameter des Reglers 32 zur dämpfungsoptimalen Ansteuerung des Elektromotors 14 oder des dem Elektromotor 14 vorgeschalteten Frequenzumrichters 36 dar.

Innerhalb der in FIG 2 durch die dreidimensionale Fläche 40 veranschaulichten Gesamtheit erzielbarer Dämpfungsgrade ist im Rahmen eines Verfahren zur Optimierung der Reglerparameter eine Extremwertsuche möglich. Die Extremwertsuche kann automatisch erfolgen, zum Beispiel mittels einer von der Regelungseinrichtung 38 umfassten, dafür bestimmten Funktionalität. Die Extremwertsuche findet zumindest lokale Extremwerte 42 (Gradientenverfahren) und - je nach Ausgestaltung - auch einen absoluten Extremwert 42. Die in FIG 2 exemplarisch gezeigten Daten sind dabei entweder experimentell aufgenommen oder Ergebnis einer Simulation der jeweiligen Vertikalmühle 10. Die zu dem im Rahmen der Extremwertsuche jeweils automatisch ermittelten Extremwert 42 gehörigen Reglerparameter, also zum Beispiel ein Verstärkungsfaktor Kp und eine zugehörige Nachstellzeit Tn, werden dem Regler 32 eingeprägt und zur dämpfungsoptimalen Ansteuerung des Elektromotors 14 oder des dem Elektromotor 14 vorgeschalteten Frequenzumrichters 36 verwendet.

Allerdings ist darauf hinzuweisen, dass die so ermittelbaren Reglerparameter ein hochdynamisch schwankendes Luftspaltmoment im Elektromotor 14 erzeugen. Dies wirkt sich zwar positiv auf das Schwingungsverhalten des Antriebsstrangs aus, bedeutet jedoch gleichzeitig eine hohe thermische und mechanische Belastung für den Frequenzumrichter 36 sowie den Elektromotor 14.

Um für den Betreiber der Vertikalmühle 10 größtmögliche Freiheit und Prozessstabilität zu gewährleisten, müssen die Reglerparameter zumindest zunächst entsprechend der größtmöglichen Dämpfung eingestellt werden, unabhängig davon, ob eine so große Dämpfung im Betrieb tatsächlich erforderlich ist. Dies hat zur Folge, dass der Frequenzumrichter 36 und der Elektromotor 14 stärker belastet werden als meistens notwendig ist.

Eine technische Lösung für dieses Problem ist bisher nicht erforderlich gewesen und ist entsprechend auch nicht bekannt. Die für die dämpfungsoptimale Regelung verwendete Sensorik 26 liefert allerdings gleichzeitig auch Informationen über die aktuelle Triebstrangdynamik. Durch eine automatische Bewertung der Triebstrangdynamik, zum Beispiel mittels der Regelungseinrichtung 38, lassen sich die Reglerparameter adaptiv anpassen. Eine Ergänzung des bisher vorgestellten Ansatzes liegt demnach darin, dass ein aufgrund unterschiedlicher Rezepturen und/oder Materialeigenschaften stets unterschiedliches Anregungsverhalten des Antriebsstrangs als Maß für eine jeweils erforderliche Dämpfung ausgewertet wird. Ausgehend von einem im Rahmen der Extremwertsuche ermittelten Satz von Reglerparametern erfolgt eine adaptive Anpassung der Reglerparameter, so dass auch eine geringere Dämpfung, als dies mit den optimalen Reglerparametern erreichbar wäre, resultiert, solange sich im Rahmen der automatischen Bewertung der Triebstrangdynamik ergibt, dass die mittels der Sensorik 26 erfasste Triebstrangdynamik innerhalb vorgegebener oder vorgebbarer Grenzen bleibt.

Auf diese Weise bleibt der Optimierungsspielraum für den Betreiber bei gleichzeitig reduzierter Belastung des Frequenzumrichters 36 und des Elektromotors 14 uneingeschränkt erhalten. Darüber hinaus lässt sich mit einer solchen adaptiven Anpassung der Reglerparameter eine Verbesserung des Wirkungsgrads der Vertikalmühle 10 erreichen, sowie eine Erhöhung der Lebensdauer von Frequenzumrichter 36 und Elektromotor 14, da hohe elektrische Spitzenlasten reduziert werden.

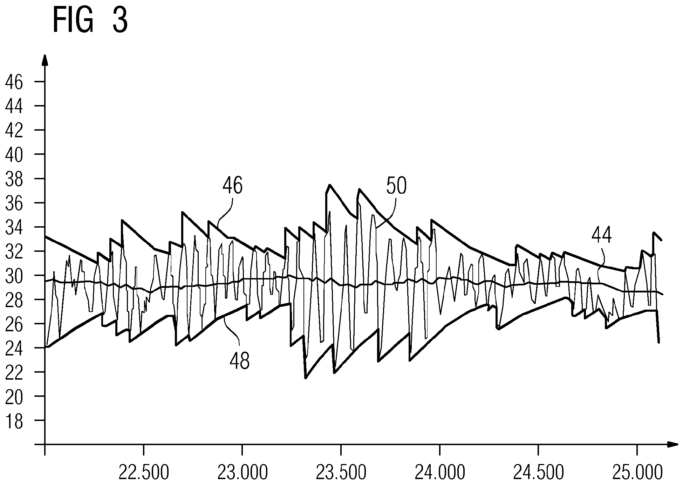

Zur Erläuterung einer solchen adaptiven Anpassung zeigt die Darstellung in FIG 3 eine Momentaufnahme der Drehmomentdynamik des Triebstrangs. Durch eine Kombinationsschaltung von zum Beispiel PT1- und MIN-/MAX-Funktionsbausteinen werden ein mittleres Moment 44 sowie eine obere Hüllkurve 46 und eine untere Hüllkurve 48 des Drehmoments 50 gebildet. Der Abstand zwischen den beiden Hüllkurven 46, 48 ist zu jedem Zeitpunkt ein Maß für die aktuelle Triebstrangdynamik. Diese dient als eine Entscheidungsgrundlage für die adaptive Anpassung der Reglerparameter. Solange ein vorgegebener oder vorgebbarer Schwellwert bezüglich der Triebstrangdynamik nicht überschritten wird, kann der Dämpfungsgrad reduziert oder beibehalten werden. Wenn der Schwellwert überschritten wird, wird der Dämpfungsgrad erhöht, zum Beispiel analog zu der zuvor beschriebenen Extremwertsuche durch Fortschreiten auf der Fläche 40 in Richtung auf den Extremwert 42.

Alternativ oder zusätzlich kann auch eine Echtzeit-Frequenzanalyse des Drehmoments 50 oder der beobachteten Drehzahl betrachtet werden. Dann lassen sich gezielt die Pegel relevanter Frequenzen, also zum Beispiel einer Eigenfrequenz oder einer der vorgenannten, im Betrieb überwiegend auftretenden Anregungsfrequenzen, beobachten. Dann kann bei Beobachtung dieser Frequenz(en) ermittelt werden, ob die Vertikalmühle 10 aufschwingt und entsprechend der Dämpfungsgrad erhöht werden muss oder ob der aktuelle Dämpfungsgrad ausreicht.

## Patentansprüche

1. Verfahren zur Antriebsregelung einer Vertikalmühle (10) mit einem um die Vertikale rotierbaren Mahlteller (12), wobei der Mahlteller (12) durch zumindest einen Elektromotor (14) und einen zumindest ein Getriebe (16) umfassenden Antriebsstrang antreibbar ist,
wobei zumindest der Elektromotor (14) und der Mahlteller (12) Massenträgheitselemente in einem schwingfähigen System darstellen, die durch das als Torsionsfederelement wirkende Getriebe (16) verbunden sind,
**dadurch gekennzeichnet,**
**dass** eine Drehzahlschwankung zumindest eines der Massenträgheitselemente erfasst wird,
**dass** der Elektromotor (14) mittels eines die erfasste Drehzahlschwankung minimierenden Reglers (32) geführt wird und dass der Regler (32) zur Führung des Elektromotors (14) derart parametriert wird, dass bei einer sinusförmigen Anregung resultierende, maximale Reaktionsmomente im Getriebe (16) minimal sind.

2. Verfahren nach Anspruch 1,
wobei der Regler (32) mittels zumindest eines einstellbaren Reglerparameters parametrierbar ist und
wobei der oder jeder Reglerparameter so gewählt wird, dass bei einer sinusförmigen Anregung resultierende, maximale Reaktionsmomente im Getriebe (16) minimal sind.

3. Verfahren nach Anspruch 2, wobei der oder jeder Reglerparameter anhand einer Mehrzahl von Dämpfungsgraden sowie anhand einer Extremwertsuche in der Mehrzahl der Dämpfungsgrade ermittelt und dem Regler (32) eingeprägt wird und wobei die Mehrzahl der Dämpfungsgrade experimentell ermittelt oder aufgrund einer Simulation gewonnenen werden.

4. Verfahren nach Anspruch 3, wobei der oder jeder Reglerparameter adaptiv anhand einer automatischen Bewertung der Triebstrangdynamik angepasst wird.

5. Verfahren nach Anspruch 4, wobei die automatische Bewertung der Triebstrangdynamik anhand einer Betrachtung eines Abstands zweier Hüllkurven (46, 48) erfolgt.

6. Computerprogrammprodukt mit einem Computerprogramm mit Programmcodemitteln, um alle Schritte von jedem beliebigen der Ansprüche 1 bis 5 durchzuführen, wenn das Computerprogramm auf einer Regelungseinrichtung (38) zur Antriebsregelung einer Vertikalmühle (10) ausgeführt wird.

7. Digitales Speichermedium mit elektronisch auslesbaren Steuersignalen, die so mit einer Regelungseinrichtung (38) zur Antriebsregelung einer Vertikalmühle (10) zusammenwirken können, dass ein Verfahren nach einem der Ansprüche 1 bis 5 ausgeführt wird.

8. Antriebssystem für eine Vertikalmühle (10) mit einem um die Vertikale rotierbaren Mahlteller (12), wobei der Mahlteller (12) durch zumindest einen Elektromotor (14) und einen zumindest ein Getriebe (16) umfassenden Antriebsstrang antreibbar ist, und
mit einer Regelungseinrichtung (38) zur Antriebsregelung der Vertikalmühle (10),
**gekennzeichnet durch**
Mittel (32) zur Ausführung des Verfahrens nach einem der Ansprüche 1 bis 5, insbesondere einen Regler (32) und ein Computerprogramm mit Programmcodemitteln, um alle Schritte von jedem beliebigen der Ansprüche 1 bis 5 durchzuführen, als Mittel zur Ausführung des Verfahrens.

9. Vertikalmühle (10) mit einem um die Vertikale rotierbaren Mahlteller (12), wobei der Mahlteller (12) durch zumindest einen Elektromotor (14) und einen zumindest ein Getriebe (16) umfassenden Antriebsstrang antreibbar ist,
**gekennzeichnet durch**
ein Antriebssystem mit einer Regelungseinrichtung (38) zur Antriebsregelung der Vertikalmühle (10) sowie Mitteln (32) zur Ausführung des Verfahrens nach einem der Ansprüche 1 bis 5, insbesondere einem Regler (32) sowie einem Computerprogramm mit Programmcodemitteln, um alle Schritte von jedem beliebigen der Ansprüche 1 bis 5 durchzuführen.

## Claims

1. Drive control method for a vertical mill (10) having a grinding plate (12) which is able to be rotated about the vertical axis, wherein the grinding plate (12) is able to be driven by at least one electric motor (14) and a drive train comprising at least one gearing (16),
wherein at least the electric motor (14) and the grinding plate (12) represent mass inertia elements in an oscillating system which are connected by the gearing (16) acting as a torsion spring element,
**characterised in that**
a rotational speed variation of at least one of the mass inertia elements is detected,
the electric motor (14) is governed by means of a controller (32) minimising the detected rotational speed variation and the controller (32) for governing the electric motor (14) is parameterised such that upon sinusoidal excitation any resulting maximum reaction torques in the gearing (16) are minimal.

2. Method according to claim 1,
wherein the controller (32) is able to be parameterised by means of at least one adjustable controller parameter and wherein the or each controller parameter is selected so that upon sinusoidal excitation any resulting maximum reaction torques in the gearing (16) are minimal.

3. Method according to claim 2, wherein the or each controller parameter is determined using a plurality of degrees of damping and using an extreme value search in the plurality of degrees of damping and is applied to the controller (32) and wherein the plurality of degrees of damping are experimentally determined or obtained by means of a simulation.

4. Method according to claim 3, wherein the or each controller parameter is adaptively adjusted using an automatic evaluation of the drive train dynamics.

5. Method according to claim 4, wherein the automatic evaluation of the drive train dynamics takes place using an observation of a spacing between two envelope curves (46, 48).

6. Computer program product comprising a computer program having program coding means in order to carry out all of the steps of any of claims 1 to 5, if the computer program is implemented on a control device (38) for the drive control of a vertical mill (10).

7. Digital storage medium with electronically readable control signals which may cooperate with a control device (38) for the drive control of a vertical mill (10) such that a method is implemented according to one of claims 1 to 5.

8. Drive system for a vertical mill (10) comprising a grinding plate (12) which is able to be rotated about the vertical axis, wherein the grinding plate (12) is able to be driven by at least one electric motor (14) and a drive train comprising at least one gearing (16), and
comprising a control device (38) for the drive control of the vertical mill (10),
**characterised by**
means (32) for implementing the method according to one of claims 1 to 5, in particular a controller (32) and a computer program having program coding means in order to carry out all of the steps of any of claims 1 to 5, as means for implementing the method.

9. Vertical mill (10) comprising a grinding table (12) which is able to be rotated about the vertical axis, wherein the grinding table (12) is able to be driven by at least one electric motor (14) and a drive train comprising at least one gearing (16),
**characterised by**
a drive system comprising a control device (38) for the drive control of the vertical mill (10) as well as
means (32) for implementing the method according to one of claims 1 to 5, in particular a controller (32) and a computer program having program coding means in order to carry out all of the steps of any of claims 1 to 5.

## Revendications

1. Procédé de réglage de l'entraînement d'un broyeur (10) vertical comprenant un plateau (12) de broyage tournant autour de la verticale, le plateau (12) de broyage pouvant être entraîné par une chaîne cinématique comprenant au moins un moteur (4) électrique et au moins une transmission (16),
dans lequel le au moins un moteur (14) électrique et le plateau (12) de broyage représentent des éléments d'inertie de masse dans un système susceptible d'osciller, qui sont reliés par la transmission (16) agissant en tant qu'élément à ressort de torsion,
**caractérisé**
**en ce que** l'on détecte une fluctuation de la vitesse de rotation d'au moins l'un des éléments d'inertie de masse,
**en ce que** l'on guide le moteur (14) électrique au moyen d'un régleur (32) minimisant la fluctuation de vitesse de rotation qui est détectée et en ce que l'on paramétrise le régleur (32) pour guider le moteur (14) électrique, de manière à minimiser des couples de réaction maximum dans la transmission (16) provenant d'une excitation sinusoïdale.

2. Procédé suivant la revendication 1,
dans lequel on peut paramétriser le régleur (32) au moyen d'au moins un paramètre de régleur réglable et
dans lequel on choisit le ou chaque paramètre du régleur de manière à minimiser des couples de réaction maximum dans la transmission (16) provenant d'une excitation sinusoïdale.

3. Procédé suivant la revendication 2, dans lequel on détermine le ou chaque paramètre du régleur au moyen d'une pluralité de degrés d'amortissement ainsi qu'au moyen d'une recherche d'extremum dans la pluralité de degrés d'amortissement et on les imprime au régleur (32) et dans lequel on détermine expérimentalement la pluralité des degrés d'amortissement ou on les obtient sur la base d'une simulation.

4. Procédé suivant la revendication 3, dans lequel on adapte le ou chaque paramètre du régleur d'une manière adaptative à l'aide d'une évaluation automatique de la dynamique de la chaîne cinématique.

5. Procédé suivant la revendication 4, dans lequel l'évaluation automatique de la dynamique de la chaîne cinématique s'effectue en considérant une distance entre deux courbes (46, 48) enveloppes.

6. Produit de programme informatique comprenant un programme informatique ayant un moyen de code de programme pour effectuer tous les stades de chacune des revendications 1 à 5 lorsque le programme informatique est réalisé sur un dispositif (38) de régulation pour la régulation de l'entraînement d'un broyeur (10) vertical.

7. Support de mémoire numérique comprenant des signaux de commande déchiffrables électroniquement, qui peuvent coopérer avec un dispositif (38) de régulation pour réguler l'entraînement d'un broyeur (10) vertical de manière à réaliser un procédé suivant l'une des revendications 1 à 5.

8. Système d'entraînement d'un broyeur (10) vertical comprenant un plateau (12) de broyage tournant autour de la verticale, le plateau (12) de broyage pouvant être entraîné par une chaîne cinématique comprenant au moins un moteur (4) électrique et au moins une transmission (16) et
comprenant un dispositif (38) de régulation pour réguler l'entraînement du broyeur (10) vertical,
**caractérisé par**
des moyens (32) de réalisation du procédé suivant l'une des revendications 1 à 5, notamment un régleur (32) et un programme informatique ayant des moyens de code de programme pour effectuer tous les stades de chacune des revendications 1 à 5 comme moyen de réalisation du procédé.

9. Broyeur (10) vertical comprenant un plateau (12) de broyeur tournant autour de la verticale, le plateau (12) de broyeur pouvant être entraîné par une chaîne cinématique comprenant au moins un moteur (14) électrique et au moins une transmission (16),
**caractérisé par**
un système d'entraînement ayant un dispositif (38) de régulation pour la régulation de l'entraînement du broyeur (10) vertical ainsi que des moyens de réalisation de procédé suivant l'une des revendications 1 à 5, notamment un régleur (32) ainsi qu'un programme informatique ayant des moyens de code de programme pour effectuer tous les stades de chacune des revendications 1 à 5.
